# EUROPEAN PATENT SPECIFICATION

(11) **EP 2 573 834 B1**
(45) Date of publication and mention of the grant of the patent: **16.04.2014**
(21) Application number: 12185201.6
(22) Date of filing: 20.09.2012
(51) Int. Cl.: H01M 10/052, H01M 10/0587, H01M 10/04, H01M 2/02

(54) **Battery**
Batterie
Batterie

(30) Priority: 21.09.2011 JP 2011205502
(43) Date of publication of application: 27.03.2013
(73) Proprietor: GS Yuasa International Ltd., Kisshoin Minami-ku, Kyoto-shi Kyoto 601-8520 (JP)
(72) Inventor: SEGAWA, Masazumi, Kyoto-shi, Kyoto 601-8520 (JP)
(74) Representative: Isarpatent

(56) References cited:
- JP-A- 2000 285 880
- US-A- 6 048 639
- US-A1- 2004 106 038

## Description

### BACKGROUND OF THE INVENTION

### 1. Field of the Invention

The present invention relates to a battery, and in particular, a battery provided with an exterior body formed of a laminate film.

### 2. Description of the Related Art

A battery provided with an exterior body formed of a laminate film has been conventionally known (refer to, for example, JP-A-11-213964).

JP-A-11-213964 discloses the battery provided with the exterior body having a welded portion obtained by overlapping a part of an inner surface and a part of an outer surface of the laminate film and welding them. This exterior body has a sealed portion formed by bringing the inner surfaces of the tubular (cylindrical) laminate film, in which the welded portion is formed, into contact with each other and welding them to each other at each longitudinal end of the laminate film. The battery is also provided with a pair of lead terminals exposed from one sealed portion of the exterior body to the outside. The pair of lead terminals are spaced in a width direction (shorter direction) of the battery, and the welded portion of the exterior body is located between the pair of lead terminals. Accordingly, the welded portion of the exterior body is provided in the center of the battery in the width direction.

However, in the battery provided with the exterior body formed of the elastic laminate film, since the exterior body expands and contracts with charge-discharge of the battery, a deformation of the exterior body caused by expansion and shrink becomes large in the center of the battery in the width direction. Especially, the exterior body that stores a wound power generating element formed by winding electrodes largely expands and contracts in the center in the width direction. With such configuration disclosed in JP-A-11-213964, since the welded portion is arranged in the center of the battery, a relatively large stress is applied to the welded portion due to expansion and shrink, possibility resulting in that the welded portion is opened, decreasing reliability of the welded portion. Such decrease in the reliability of the welded portion leads to reduction of the life and the decrease in the reliability of the battery.

In US 2004/106038 A1 an automobile cell is disclosed comprising an electric power generating element within a cell outer sheath made from a laminate film welded to gas-tightly encapsulate the electric power generating element. A positive electrode terminal lead and a negative electrode terminals lead are formed by the cell outer sheath that has been welded and extend to an outside of the cell outer sheath. The electric power generating element can be configured such that the positive electrode, the negative electrode plate and a separator separating the two can be wound about a winding axis.

### SUMMARY OF THE INVENTION

An object of the present invention provides a battery capable of suppressing decrease in the reliability of the welded portion of the laminate film.

A first aspect of the present invention is a battery which includes an exterior body formed of a laminate film, the exterior body having a welded portion, a power generating element stored in the exterior body, the power generating element being formed by winding electrodes and having an inner circumferential surface and an outer circumferential surface, and a lead terminal connected to the power generating element, the lead terminal being exposed to the outside of the exterior body, and in a projected plane with respect to a plane where the welded portion is arranged, the welded portion of the exterior body is arranged in a region (A-B region) between an intermediate point (A) of an end of the inner circumferential surface and an end of the outer circumferential surface of the power generating element, and a side end of the lead terminal (B).

A second aspect of the present invention is the battery which has the welded portion preferably formed by welding a part of an inner surface and a part of an outer surface of the laminate film in a face-to-face state.

A third aspect of the present invention is the battery which has a positive electrode lead terminal preferably arranged so as to be exposed from a sealed portion provided at one end of the exterior body, and a negative electrode lead terminal arranged so as to be exposed from a sealed portion provided at the other end of the exterior body.

### BRIEF DESCRIPTION OF THE DRAWINGS

The foregoing and other features of the invention will become apparent to one skilled in the art to which the present invention relates upon consideration of the invention with reference to the accompanying drawings, wherein:
Fig. 1 shows a perspective view showing an overall configuration of a battery in accordance with an embodiment of the present invention;
Fig. 2 shows a sectional view along a line 500-500 in Fig. 1;
Fig. 3 shows a view for describing the position of a welded portion of the battery in accordance with the embodiment of the present invention;
Fig. 4 shows a partial enlarged view of a sealed portion when viewed in a longitudinal direction of the battery;
Fig. 5 shows an enlarged sectional view showing a layer structure of an exterior body of the battery;
Fig. 6 shows an enlarged sectional view showing the welded portion of the battery in accordance with the embodiment of the present invention;
Fig. 7 shows a view for describing the position of a welded portion of a battery in First modification example of the embodiment of the present invention;
Fig. 8 shows a view for describing the position of a welded portion of a battery in Second modification example of the embodiment of the present invention;
Fig. 9 shows a view for describing the position of a welded portion of a battery in Third modification example of the embodiment of the present invention; and
Fig. 10 shows a perspective view showing a battery in Fourth modification example of the embodiment of the present invention.

### DETAILED DESCRIPTION OF THE INVENTION

Preferred embodiment of the present invention will be described hereinafter with reference to figures.

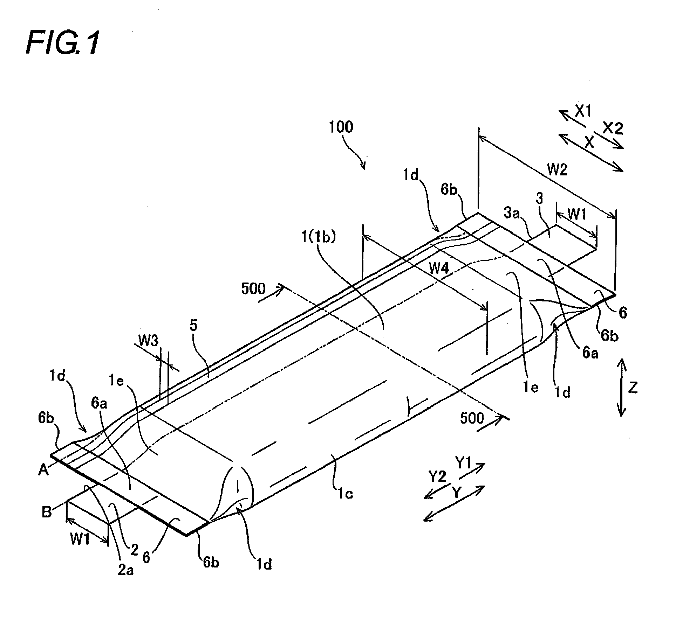

First, referring to Fig. 1 to Fig. 6, a battery 100 in accordance with an embodiment of the present invention will be described.

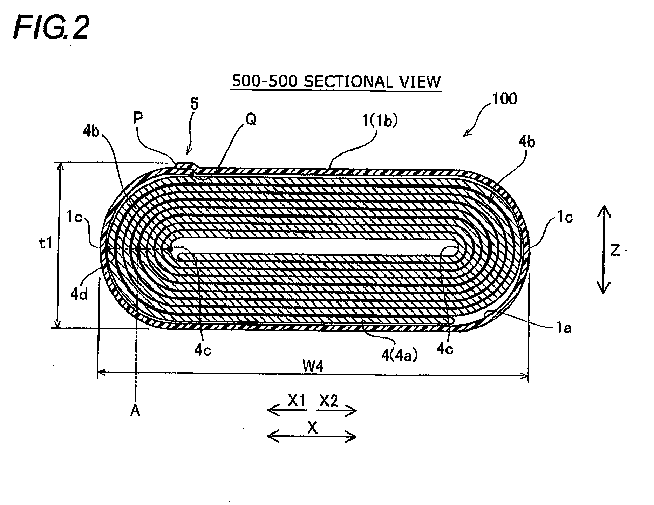

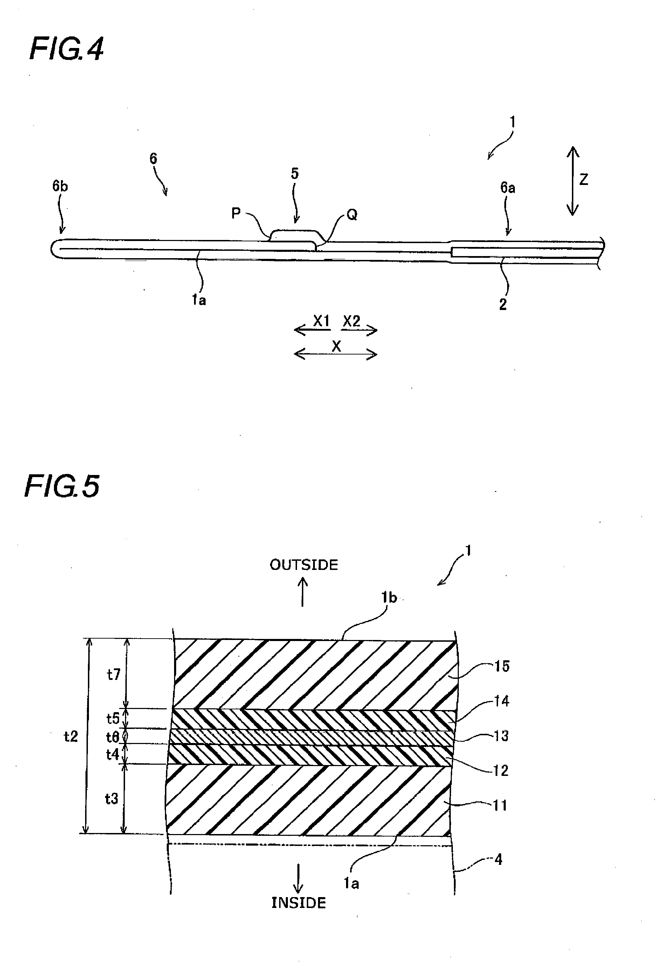

As shown in Fig. 1, the battery 100 in accordance with the embodiment of the present invention includes an exterior body 1 formed of a laminate film (refer to Fig. 5), a flat-plate like positive electrode terminal 2 and a flat-plate like negative electrode terminal 3, which are exposed from respective ends of the battery 100 in a longitudinal direction (Y-direction) to the outside. As shown in Fig. 2, the exterior body 1 stores a wound power generating element 4 and an electrolyte solution (not shown). The positive electrode terminal 2 and the negative electrode terminal 3 are examples of a "lead terminal" of the present invention.

In this embodiment, the battery 100 is a medium-sized or large-sized lithium ion battery having a relatively large discharge capacity of 10 Ah or higher. Specifically, the battery 100 has an outer circumferential length in the width direction (X-direction) in a range of about 10 cm to about 100cm, and a thickness t1 (dimension in a Z-direction) in a range of about 0.5 cm to about 5 cm.

As shown in Fig. 1, the positive electrode terminal 2 and the negative electrode terminal 3 are made of aluminum and copper, respectively, and are arranged so as to be exposed from sealed portions 6 at both longitudinal ends of the exterior body 1 to the outside. The positive electrode terminal 2 and the negative electrode terminal 3 are provided at the same position of the battery 100 in the width direction. A width (dimension in the X-direction) W1 as an exposed portion of each of the positive electrode terminal 2 and the negative electrode terminal 3 is equal to or larger than about 10% of a width W2 of the sealed portion 6. The positive electrode terminal 2 and the negative electrode terminal 3 each have a thickness of about 0.1 mm or larger.

As shown in Fig. 2, the power generating element 4 is formed by winding a positive electrode, a negative electrode, and a separator arranged between the positive electrode and the negative electrode in an overlapped state. For this reason, the power generating element 4 is substantially shaped like a tube having an inner circumferential surface and an outer circumferential surface. The power generating element 4 has a substantially oval cross section including a flat portion 4a and a circularly curved portion 4b.

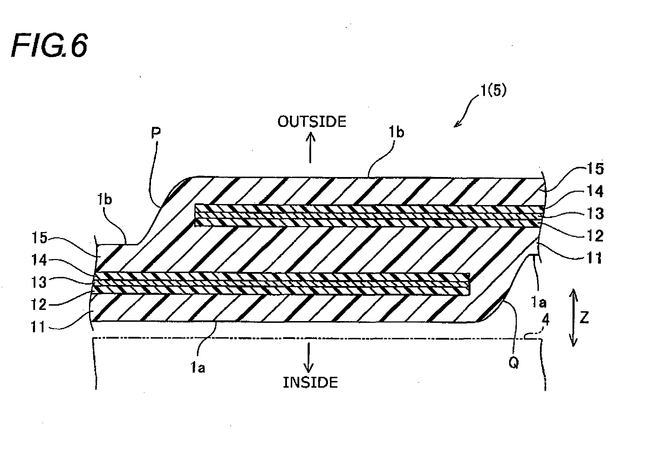

As shown in Fig. 2 and Fig. 6, the exterior body 1 has a welded portion 5 obtained by bringing a part of an inner surface 1a on the side of one end P (side in an arrow X1-direction) and a part of an outer surface 1b on the side of the other end Q (side in an arrow X2-direction) in the width direction of the laminate film to be faced to each other and welding them. As shown in Fig. 1, the welded portion 5 is shaped like a band linearly extending along the entire exterior body 1 in the longitudinal direction (Y-direction), and has a width W3 in the X-direction.

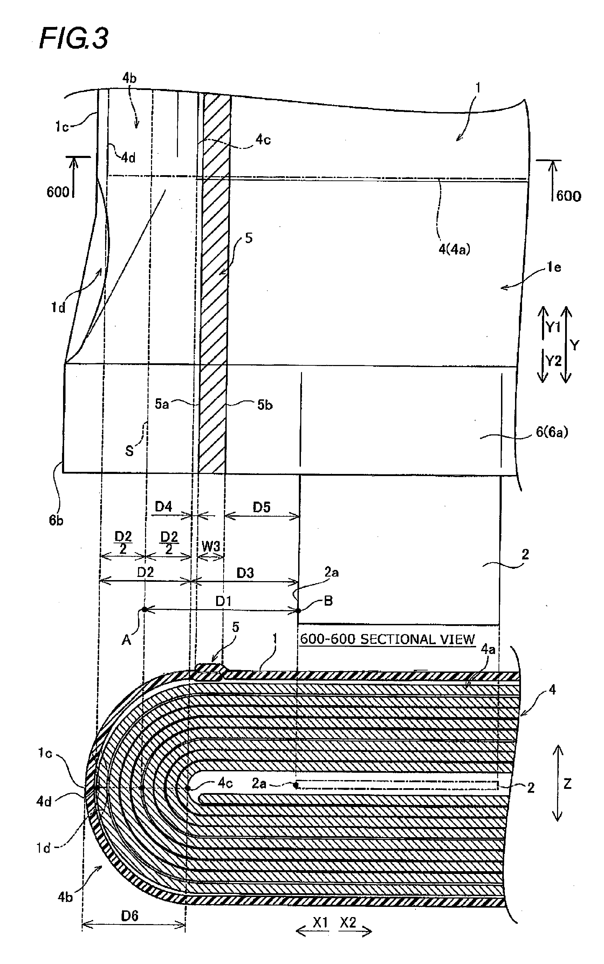

In this embodiment, as shown in Fig. 3, in a projected plane with respect to a plane where the welded portion 5 is arranged (when viewed in a plane view), the welded portion 5 is arranged in a region (A-B region) between point A and point B. The point A is an intermediate point of an inner circumferential end 4c and an outer circumferential end 4d of the power generating element 4. The point B is a side end 2a (3a) of the positive electrode terminal 2 (the negative electrode terminal 3). Here, the intermediate point (point A) is a point on a bisector S between the inner circumferential end 4c and the outer circumferential end 4d. Specifically, the position of the welded portion 5 in the X-direction is in the region (A-B region) having a distance D1 between the intermediate point (point A) on the bisector S and the side end 2a (3a) (point B) in the X1-direction. In this embodiment, a distance between the inner circumferential end 4c and the outer circumferential end 4d of the power generating element 4 is expressed as D2. A distance between the point B (side end 2a (3a)) and the inner circumferential end 4c in the X-direction is expressed as D3. In Fig. 3, the welded portion 5 in the plane view is hatched for easier comprehension.

The welded portion 5 is arranged so as not to overlap the positive electrode terminal 2 and the negative electrode terminal 3. Further, the welded portion 5 is also arranged so as not to overlap a side end 1c of the exterior body 1, which stores the power generating element 4. In this embodiment, the entire welded portion 5, in the X-direction, falls within a region having a distance D3 (D3 < D1) between the positive electrode terminal 2 (negative electrode terminal 3) and the inner circumferential end 4c of the power generating element 4. Describing in detail, a side 5a of the welded portion 5 on the side of the arrow X1-direction is arranged away from the inner circumferential end 4c of the power generating element 4 on the side of the arrow X1-direction by a distance D4. A side 5b of the welded portion 5 on the side of the arrow X2-direction is arranged away from the point B by a distance D5.

In a region outer from the inner circumferential end 4c (side of the X1-direction), which has a distance D6 (region between the inner circumferential end 4c and the side end 1c of the exterior body 1), the exterior body 1 is circularly curved along the outer shape of the wound power generating element 4.

The exterior body 1 has the sealed portion 6 formed by welding the face-to face inner surfaces 1a to each other at each longitudinal end of the battery 100 as shown in Fig. 1. As shown in Fig. 4, the flat-plate like positive electrode terminal 2 and the negative electrode terminal 3 are sandwiched at the sealed portions 6 at both the ends of the battery 100. The sealed portions 6 each are shaped like a flat plate. In Fig. 4, components other than the sealed portions 6 are not shown.

Since the inner surfaces 1a of the exterior body 1 (laminate film) in the sealed portion 6 are welded to each other, the three layers of the laminate film are welded to one another in the overlapped state in the welded portion 5, and two layers of the laminate film are welded to each other in the overlapped state in a region other than the welded portion 5. In a portion of each sealed portion 6, in which the positive electrode terminal 2 (negative electrode terminal 3) is arranged, (terminal portion 6a), the positive electrode terminal 2 (negative electrode terminal 3) is sandwiched between the inner surfaces 1a of the exterior body 1, and the three layers (two layers of the laminate film + one layer of the terminal) including the positive electrode terminal 2 (negative electrode terminal 3) in the overlapped state are sealed. The laminate film is folded and welded in a closely-contact state at an end 6b of the sealed portion 6 in the X-direction.

As shown in Fig. 5, the exterior body 1 is formed of the laminate film obtained by stacking a PE (polyethylene) welding layer 11, a PET (polyethylene terephthalate) layer 12, an aluminum layer 13, a PET layer 14, and a PE welding layer 15 in this order. The PE welding layer 11 is located on inner side where the power generating element 4 is arranged. The PE welding layer 15 is located on outer side.

The laminate film is formed so as to have an entire thickness (total thickness) t2 in a range of about 150 µm to about 500 µm. The power generating element 4 stored in the exterior body 1 increases in size and mass with an increase in the capacity (upsizing) of the lithium ion battery 100. Therefore, when the total thickness t2 of the exterior body 1 is too small, the strength can become insufficient. Meanwhile, when the total thickness t2 is too large, uniform welding of the sealed portions 6 can become difficult resulting in less reliability of sealing property. For this reason, it is preferred that the total thickness t2 of the laminate film is not less than 0.3% and not more than 5% of the thickness t1 of the battery 100 in a range of about 150 µm to about 500 µm according to dimension (thickness) of the battery 100.

The PE welding layers 11, 15 are resin layers for welding and forming the welded portion 5 and the sealed portions 6. In this embodiment, thicknesses t3, t7 of the PE welding layers 11, 15, which are formed on the inner surface 1a and the outer surface 1b of the exterior body 1, respectively, each are in a range of about 50 µm to about 200 µm, preferably, in a range of about 100 µm to about 150 µm.

The PET layers 12, 14 are heat-resistant resin layers having a heat resisting property and an insulating property. In this embodiment, thicknesses t4, t5 of the PET layers 12, 14, respectively, each are set to be in a range of about 5 µm to about 50 µm. When the thickness of the PET layer 12, 14 is small, it can be hard to obtain the effect of preventing short-circuit in the event that the PE welding layer 11 in the terminal portion 6a is melt and extended. On the other hand, when the thickness of the PET layer 12 (14) is large, the exterior body 1 becomes hard and therefore, the sealed portions 6 are hard to be welded in the vicinity of the end 6b.

The aluminum layer 13 has a function of blocking gas and liquid coming from the inside and outside of the exterior body 1, and is formed of an aluminum foil having a thickness t6 in a range of about 4 µm to about 100 µm in this embodiment. The thickness of the aluminum layer 13 is preferably, not less than about 2% and not more than about 30%, more preferably not less than about 4% and not more than about 20% of the total thickness t2 of the laminate film, in the range of about 4µm to about 100 µm. Heat generated in the positive electrode terminal 2 (negative electrode terminal 3) or the power generating element 4 becomes large in the case of discharge at a large current. By setting the thickness t6 of the aluminum layer 13 to the above-mentioned range, the highly thermal conductive aluminum layer 13 can effectively diffuse heat of the battery 100 to the entire exterior body 1, followed by effective heat radiation from the entire exterior body 1. When the thickness t6 of the aluminum layer 13 is too large, breaking of the aluminum layer 13 is easy to occur due to deformation of the exterior body 1.

An adhesive layer (formed of adhesive agent, adhesive film or the like) for adhering the aluminum layer 13 and the PET layer 12, 14 or the PET layer and the PE layer to each other may be provided.

Next, a manufacturing process of the battery 100 having the above-mentioned configuration in accordance with this embodiment will be described.

First, the power generating element 4 is formed by winding the positive electrode and the negative electrode via the separator. Then, the flat-plate like positive electrode terminal 2 is connected to the positive electrode, and the flat-plate like negative electrode terminal 3 is connected to the negative electrode.

As shown in Fig. 2 and Fig. 6, by overlapping a part of the inner surface 1a of the laminate film on the side of one end P and a part of the outer surface 1b on the side of the other end Q and welding them, the band-like welded portion 5 (refer to Fig. 1) extending in the longitudinal direction is formed. Thereby, the exterior body 1 is shaped like a tube (cylinder).

Next, the power generating element 4 is stored in the tubular exterior body 1 and one opened end of the exterior body is welded and sealed. After that, an electrolyte solution is injected from the other opened end of the exterior body 1. Finally, by sealing the other opened end of the exterior body 1, the battery 100 in this embodiment is formed.

Describing in more detail, the power generating element 4 is stored in the exterior body 1 such that the positive electrode terminal 2 is exposed from the opening at one longitudinal end (side end in a Y2-direction) of the tubular exterior body 1, and the negative electrode terminal 3 is exposed from the opening at the other longitudinal end (side end in a Y1-direction) of the tubular exterior body 1. At this time, the welded portion 5 of the exterior body 1 is arranged so as to wholly fall within the A-B region (distance D1). In this state, by welding one of the opened ends of the tubular exterior body 1, the sealed portions 6 are formed at one side of the battery 100. By forming the sealed portions 6, positional relationship among the welded portion 5, the positive electrode terminal 2 (negative electrode terminal 3) and the power generating element 4 is fixed.

Here, the thickness of the terminal portion 6a of the sealed portions 6 becomes large since the positive electrode terminal 2 (negative electrode terminal 3) is sandwiched. For this reason, if the welded portion 5 is arranged in the terminal portion 6a, the thickness of the welded portion is further increased. In this case, in each sealed portions 6, since thickness of the portion where the positive electrode terminal 2 (negative electrode terminal 3) and the welded portion 5 overlap (terminal portion 6a) is different from the thickness of the other portion, temperature distribution varies when the sealed portion 6 are heated and therefore, it is difficult to make the welding state of the entire sealed portion 6 uniform. For this reason, the welding strength of the sealed portions 6 locally varies, resulting in that it is difficult to ensure the reliability of sealing the sealed portions 6 in the terminal portion 6a. However, in this embodiment, as shown in Fig. 3, since the entire welded portion 5 is arranged so as not to overlap the positive electrode terminal 2 and the negative electrode terminal 3, the welded portion 5 is not arranged in the terminal portions 6a of the sealed portions 6. This can prevent the reliability of the sealed portions 6 from lowering.

As shown in Fig. 4, the laminate film is folded and welded in the closely contact state at the end 6b of the sealed portion 6. If the welded portion 5 is arranged across an upper surface and a lower surface of the end 6b of the sealed portion 6, it is difficult to fold the welded portion 5 and bring the welded portion 5 into closely contact with the upper surface and the lower surface of the end 6b of the sealed portion 6. It is because the thickness of the welded portion 5 becomes large. In this case, since the four layers of the laminate film overlap, it is difficult to uniformly heat the end 6b where the four layers of the laminate film are stacked and the other portion (for example, the portion where two layers of the laminate film are stacked) at welding operation. As a result, at welding, the PE welding layer 11 (inner surface 1a) at the end 6b can be insufficiently melted, or the PE welding layer 11 (inner surface 1a) in the portion other than the end 6b can be excessively melted, resulting in difficulty of ensuring the reliability of sealing of the sealed portions 6. In this embodiment, as shown in Fig. 3, since the welded portion 5 is arranged in the A-B region, the welded portion 5 does not overlap the side end 1c of the exterior body 1. For this reason, the welded portion 5 is not arranged in the end 6b of the sealed portions 6, thereby preventing the above-mentioned disadvantage.

As shown in Fig. 1, the width W2 of the sealed portions 6 is larger than a width W4 of the longitudinal central portion of the battery 100 which is storing the power generating element 4. Therefore, a hollow is formed in a side surface of the exterior body 1. In detail, the hollow is formed in a portion 1d, which extending from an end of the curved portion 4b in the Y-direction to the end 6b. Due to the hollow, as shown in Fig. 3, the exterior body 1 is largely deformed in a region outer from the intermediate point (point A) in the X-direction. If the welded portion 5 is arranged in the portion 1d, the hollow is formed in the welded portion 5 itself and thus, a stress tends to concentrate on the welded portion 5. As described above, in this embodiment, the welded portion 5 is not arranged in the side end 1c of the exterior body 1. And the welded portion 5 is not arranged in the portion 1d that has the hollow and is largely deformed. Furthermore, the welded portion 5 is not arranged in the central portion of the battery 100 in the width direction, in which the deformation of the exterior body is large due to repetitious expansion and shrink of the exterior body 1. Therefore, a decrease in the reliability of the welded portion 5 can be suppressed. Moreover, since the welded portion 5 does not overlap the side end 1c of the exterior body 1, there is no need to fold and weld the welded portion 5 when the sealed portion 6 is formed. As a result, the opening of the exterior body 1 can be sealed more reliably.

In this embodiment, the entire welded portion 5 is arranged in the A-B region, in particular, the region having the distance D3, so that the entire welded portion 5 is arranged in a flat region to avoid the curved portion 4b. Thereby, the welded portion 5 has less stress, and this improves the reliability of the welded portion 5.

In this embodiment, since the positive electrode terminal 2 and the negative electrode terminal 3 are arranged on the different side of the battery 100 respectively, as compared to the case where the two terminals 2, 3 are arranged on one side of the battery 100, it is easy to ensure the arrangement region (distance D1) of the welded portion 5. Further, it is possible to increase the width W1 of the positive electrode terminal 2 (negative electrode terminal 3) to reduce an electrical resistance of the positive electrode terminal 2 (negative electrode terminal 3) and therefore, this embodiment is especially effective for application to the medium-sized to large-sized battery 100.

### (First to Third modification example of embodiment)

Although the entire welded portion 5 is arranged in the A-B region in this embodiment, the present invention is not limited to this. According to the present invention, the entire welded portion 5 need not be accurately arranged in the A-B region as long as it does not deviate from the subject matter of the present invention.

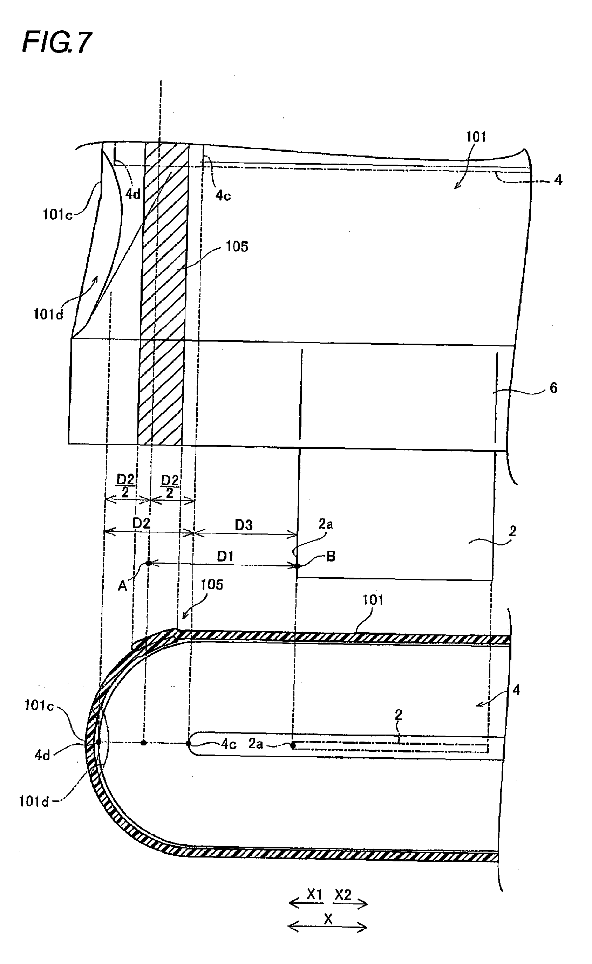

That is, as long as the welded portion 5 is not arranged in the side end 1c of the exterior body 1 and the portion 1d of the exterior body, which has the hollow, it is acceptable that one edge of a welded portion 105 can slightly protrude from the A-B region in the arrow X1-direction, as in First modification example shown in Fig. 7. In an exterior body 101 in First modification example, in a projected plane with respect to a plane where the welded portion 105 is arranged, one end (side end in the arrow X2-direction) of the welded portion 105 in the width direction is arranged in the A-B region (distance D1). The other end (side end in the arrow X1-direction) of the welded portion 105 is arranged in a region outer than the intermediate point (point A) between the inner circumferential end 4c and the outer circumferential end 4d (region having a distance D2/2 between the intermediate point A and the outer circumferential end 4d). Also in First modification example, the welded portion 105 does not overlap a side end 101c of the exterior body 101 and a portion 101d of the exterior body, which has a hollow.

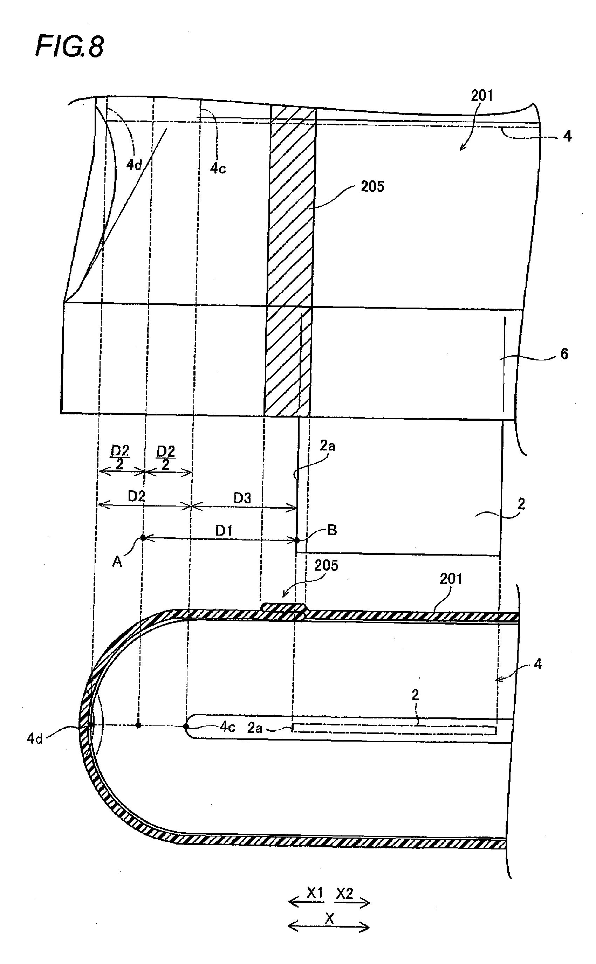

Second modification example is shown in Fig. 8. It is acceptable that one edge of a welded portion 205 can slightly protrude from the A-B region in the arrow X2-direction. In Second modification example, in a projected plane with respect to a plane where the welded portion 205 is arranged, one end (side end in the arrow X2-direction) of the welded portion 205 in the width direction is arranged on the arrow X2-direction-side of the side end 2a (3a) of the positive electrode terminal 2 (negative electrode terminal 3) (point B). Thus, one end of the welded portion 205 is arranged so as to overlap the positive electrode terminal 2 (negative electrode terminal 3). The other end (side end in the arrow X1-direction) of the welded portion 205 is arranged in the A-B region (distance D1) and a region having the distance D3 between the point B and the inner circumferential end 4c.

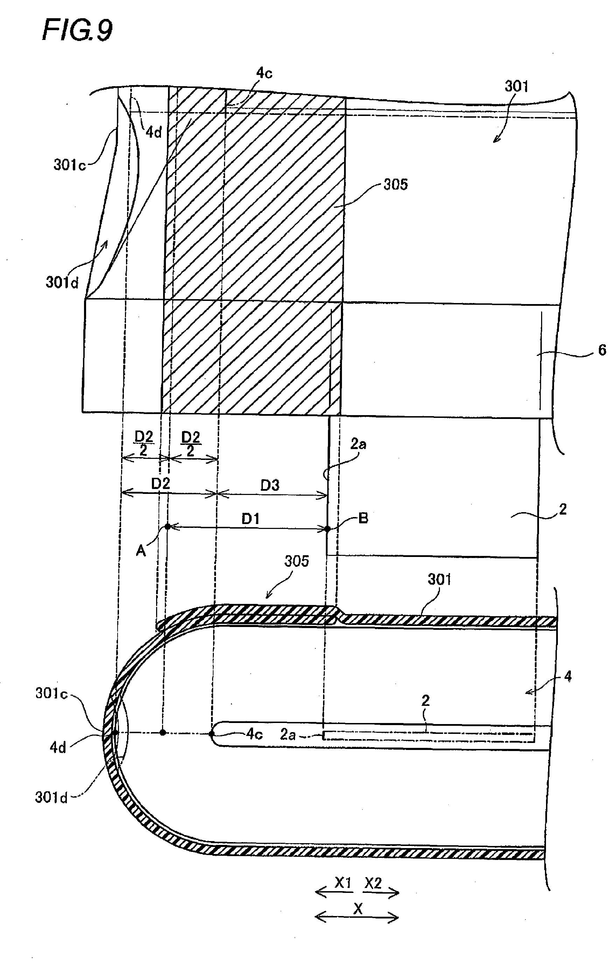

Third modification example is shown in Fig. 9. It is acceptable that a welded portion 305 can slightly protrude from the A-B region to both sides in the X-direction. In Third modification example, in a projected plane with respect to a plane where the welded portion 305 is arranged, most of the welded portion 305 is arranged in the A-B region (distance D1). The welded portion 305 is arranged so as to slightly protrude from the region having the distance D1 to both sides in the X-direction. Accordingly, in the projected plane with respect to a plane where the welded portion 305 is arranged, one end (side end in the arrow X2-direction) of the welded portion 305 is arranged so as to overlap the positive electrode terminal 2 (negative electrode terminal 3). The other end (side end in the arrow X1-direction) of the welded portion 305 is arranged so as to overlap the inner circumferential end 4c of the power generating element 4. The welded portion 305 does not overlap a side end 301c of the exterior body 301 and a portion 301d of the exterior body, which has a hollow.

As shown in First to Third modification examples, even when the entire welded portions 105, 205, 305 are not arranged in the region between the positive electrode terminal 2 (negative electrode terminal 3) and the inner circumferential end 4c of the power generating element 4, the decrease in the reliability of the welded portion 5 can be suppressed. This reason is as follows. By arranging the welded portion in the A-B region, the entire welded portion is not arranged in the central portion of the battery in the width direction. This makes the welded portion be avoided from large deformation of the exterior bodies 101, 201, 301 which is caused by expansion and shrink of power generating element 4.

It should be recognized that the disclosed embodiment and modification examples are illustrative in all points and not limiting. The scope of the present invention is defined by Claims rather than the description of the embodiment and modification examples, and includes all changes that fall within equivalent meaning and scope to Claims.

For example, although the welded portion is arranged on the side of the X1-direction in the embodiment and First to Third modification examples, the present invention is not limited to this. According to the present invention, the welded portion may be arranged on the side of the X2-direction.

The layer structure of the laminate film is not limited. Although the PE welding layers 11, 15 are provided on the inner and outer surfaces of the laminate film in this embodiment, the present invention is not limited to this. These resin layers for welding may be made of polyolefin resins other than polyethylene, or thermoplastic resins that can be welded, other than the polyolefin resins.

Although the PET layers 12, 14 are provided in the laminate film as heat-resistant resin layers in this embodiment, the present invention is not limited to this. A heat-resistant resin layer made of other materials may be provided, or a heat-resistant resin layer need not be necessarily provided.

Although the aluminum layer 13 as a metal layer is provided in the layers in this embodiment, a metal layer made of materials other than aluminum may be used.

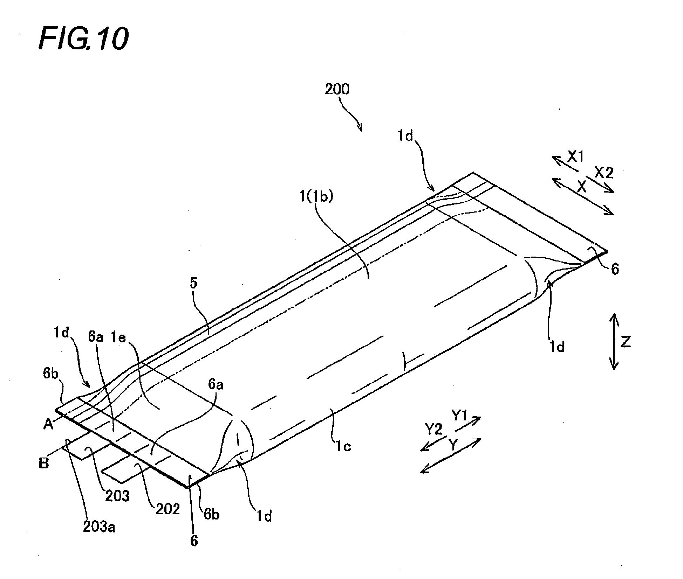

Although the positive electrode terminal and the negative electrode terminal are provided at one end and the other end of the exterior body in the longitudinal direction, respectively, in the embodiment and First to Third modification examples, the present invention is not limited to this. According to the present invention, as in Fourth modification example shown in Fig. 10, both of a positive electrode terminal 202 and a negative electrode terminal 203 of a battery 200 may be arranged on one side (side in the Y2-direction in Fig. 10) in the longitudinal direction. In this case, when the welded portion 5 is provided on the side of the X1-direction, the welded portion 5 can be provided in the region between point A and a side end 203a of the negative electrode terminal 203 on the side of the X1-direction (point B). However, when the present invention is applied to the medium-sized or large sized battery in which a relatively large current flows, it is preferred to arrange the positive electrode terminal and the negative electrode terminal at one end and the other end of the exterior body in the longitudinal direction, respectively, so as to increase the width of the positive electrode terminal and the negative electrode terminal.

Although the positive electrode terminal and the negative electrode terminal are provided at the same position of the battery in the width direction in the embodiment and First to Third modification examples, the present invention is not limited to this. The positive electrode terminal and the negative electrode terminal can be provided in the battery so as to be displaced from each other in the width direction.

Although the welded portion is formed by overlapping a part of the inner surface and a part of the outer surface of the laminate film and welding them in this embodiment, the welded portion can be also formed by overlapping the inner surfaces of the laminate film and welding them. However, when the inner surfaces are overlapped and welded, it is necessary to fold the welded portion in the width direction of the battery, possibly applying a load on the folded portion.

Although the battery according to the present invention is applied to the lithium ion battery as one kind of non-aqueous electrolyte battery in above-mentioned embodiment, the present invention is not limited to this. The battery according to the present invention may be applied to a non-aqueous electrolyte battery other than the lithium ion battery, or an aqueous electrolyte battery such as a nickel hydride battery.

According to a first aspect of the invention, in the battery, the entire welded portion is not arranged in the central portion of the battery in the width direction by arranging the welded portion of the exterior body in the A-B region as described above. This prevents a relatively large stress from applying to the welded portion due to expansion and shrink of power generating element. As a result, it can be prevented that the reliability of the welded portion decreases. In other words, it can be prevented the degradation of welding property. Further, in the vicinity of the side end of the exterior body, the exterior body is largely deformed so as to become recessed toward the sealed portion. For this reason, when the welded portion is arranged in this region, the welded portion itself is bent and a stress is applied to the welded poriton. According to the present invention, since the entire welded portion is not arranged in the vicinity of the side end of the exterior body, the reliability of the welded portion can be improved.

According to a second aspect of the invention, as compared to the case where the inner surfaces of the laminate film are welded in the faced state, the number of the overlapped layers of the laminate film in the sealed portion of the exterior body is reduced. Therefore, sealing of the sealed portion is more reliably. Moreover, since it is no need to fold the laminate film along the welded portion, damage of the laminate film in fold line can be prevented.

According to a third aspect of the invention, since the positive electrode lead terminal and the negative electrode lead terminal can be arranged at one end and the other end of the exterior body, respectively, it is easy to ensure the arrangement region (A-B region) of the welded portion, as compared to the case where both the positive electrode lead terminal and the negative electrode lead terminal are arranged at one end of the exterior body. Further, since both the positive electrode lead terminal and the negative electrode lead terminal are not arranged on one side of the battery, the width of each lead terminal can be easily increased, thereby reducing an electric resistance of the lead terminal. Here, the amount of heat generated by a current flowing through the lead terminals is proportional to the electric resistance of the lead terminals. Heat generation of the lead terminals at charge-discharge can be suppressed by increasing the width of the lead terminals. This aspect of the invention is especially effective for such medium-sized or large-sized battery. Because the medium-sized or large-sized battery tends to flow high current, resulting in large heat generation of lead terminals.

## Claims

1. A battery (100) comprising:
an exterior body (1, 101, 201, 301) formed of a laminate film, the exterior body (1, 101, 201, 301) having a welded portion (5, 105, 205, 305);
a power generating element (4) stored in the exterior body (1, 101, 201, 301), the power generating element (4) being formed by winding electrodes and having an inner circumferential surface and an outer circumferential surface; and
a lead terminal connected to the power generating element (4), the lead terminal being exposed to the outside of the exterior body (1, 101, 201, 301),
**characterized in that**
in a projected plane with respect to a plane where the welded portion (5, 105, 205, 305) is arranged, the welded portion (5, 105, 205, 305) of the exterior body (1, 101, 201, 301) is arranged in a region between an intermediate point (point A) of an end of the inner circumferential surface
and an end of the outer circumferential surface of the power generating element (4), and a side end (point B) of the lead terminal.

2. The battery (100) according to claim 1, wherein the welded portion (5, 105, 205, 305) is formed by welding a part of an inner surface and a part of an outer surface of the laminate film in a face-to-face state.

3. The battery (100) according to claim 1 or 2, wherein a positive provided at one end of the exterior body (1, 101, 201, 301), and a negative electrode lead terminal is arranged so as to be exposed from a sealed portion provided at the other end of the exterior body (1, 101, 201, 301).

## Patentansprüche

1. Batterie (100), die Folgendes umfasst:
- einen Außenkörper (1, 101, 201, 301), der aus einem Laminatfilm gebildet ist, wobei der Außenkörper (1, 101, 201, 301) einen geschweißten Abschnitt (5, 105, 205, 305) aufweist;
- ein Stromerzeugungselement (4), das in dem Außenkörper (1, 101, 201, 301) untergebracht ist, wobei das Stromerzeugungselement (4) durch gewickelte Elektroden gebildet wird und eine Innenumfangsfläche und eine Außenumfangsfläche aufweist; und
- einen Zuleitungsanschluss, der mit dem Stromerzeugungselement (4) verbunden ist, wobei der Zuleitungsanschluss außerhalb des Außenkörpers (1, 101, 201, 301) frei liegt,
**dadurch gekennzeichnet, dass**
in einer projizierten Ebene relativ zu einer Ebene, wo sich der geschweißte Abschnitt (5, 105, 205, 305) befindet, der geschweißte Abschnitt (5, 105, 205, 305) des Außenkörpers (1, 101, 201, 301) in einer Region zwischen einem Zwischenpunkt (Punkt A) eines Endes der Innenumfangsfläche und eines Ende der Außenumfangsfläche des Stromerzeugungselements (4) und einem Seitenende (Punkt B) des Zuleitungsanschlusses angeordnet ist.

2. Batterie (100) nach Anspruch 1, wobei der geschweißte Abschnitt (5, 105, 205, 305) durch Schweißen eines Teils einer Innenfläche und eines Teils einer Außenfläche des Laminatfilms in einem Stirnfläche-an-Stirnfläche-Zustand gebildet wird.

3. Batterie (100) nach Anspruch 1 oder 2, wobei ein positiver Elektrodenzuleitungsanschluss an einem Ende des Außenkörpers (1, 101, 201, 301) angeordnet ist und ein negativer Elektrodenzuleitungsanschluss so angeordnet ist, dass er aus einem versiegelten Abschnitt frei liegt, der am anderen Ende des Außenkörpers (1, 101, 201, 301) angeordnet ist.

## Revendications

1. Batterie (100) comprenant :
- un corps extérieur (1, 101, 201, 301) formé d'un film stratifié, le corps extérieur (1, 101, 201, 301) comportant une partie soudée (5, 105, 205, 305) ;
- un élément générateur d'énergie (4) stocké dans le corps extérieur (1, 101, 201, 301), l'élément de génération d'énergie (4) étant formé en enroulant des électrodes et ayant une surface circonférentielle intérieure et une surface circonférentielle extérieure ; et
- une borne de conducteur reliée à l'élément de génération d'énergie (4), la borne de conducteur étant exposée à l'extérieur du corps extérieur (1, 101, 201, 301),
**caractérisée en ce que**
dans un plan projeté par rapport à un plan où la partie soudée (5, 105, 205, 305) est agencée, la partie soudée (5, 105, 205, 305) du corps extérieur (1, 101, 201, 301) est agencée dans une région située entre un point intermédiaire (point A) d'une extrémité de la surface circonférentielle intérieure et d'une extrémité de la surface circonférentielle extérieure de l'élément de génération d'énergie (4), et une extrémité latérale (point B) de la borne de conducteur.

2. Batterie (100) selon la revendication 1, dans laquelle la partie soudée (5, 105, 205, 305) est formée en soudant une partie d'une surface intérieure et une partie d'une surface extérieure du film stratifié dans un état face à face.

3. Batterie (100) selon la revendication 1 ou 2, dans laquelle une borne de conducteur d'électrode positive est située à une extrémité du corps extérieur (1, 101, 201, 301), et une borne de conducteur d'électrode négative est agencée de manière à être exposée à partir d'une partie scellée située au niveau de l'autre extrémité du corps extérieur (1, 101, 201, 301).
